# EUROPÄISCHE PATENTSCHRIFT

(11) **EP 2 936 193 B1**
(45) Veröffentlichungstag und Bekanntmachung des Hinweises auf die Patenterteilung: **18.05.2022**
(21) Anmeldenummer: 13766009.8
(22) Anmeldetag: 19.09.2013
(51) Int. Cl.: G01S 17/931, G01S 7/481, G01S 17/04

(54) **OPTISCHE OBJEKTERFASSUNGSEINRICHTUNG MIT EINEM MEMS UND KRAFTFAHRZEUG MIT EINER SOLCHEN ERFASSUNGSEINRICHTUNG**
OPTICAL OBJECT-DETECTION DEVICE HAVING A MEMS AND MOTOR VEHICLE HAVING SUCH A DETECTION DEVICE
SYSTÈME OPTIQUE DE DÉTECTION D'OBJETS À MEMS ET VÉHICULE À MOTEUR ÉQUIPÉ D'UN TEL SYSTÈME DE DÉTECTION

(30) Priorität: 21.12.2012 DE 102012025281
(43) Veröffentlichungstag der Anmeldung: 28.10.2015
(73) Patentinhaber: Valeo Schalter und Sensoren GmbH, 74321 Bietigheim-Bissingen (DE)
(72) Erfinder: GEIGER, Tobias, 74321 Bietigheim-Bissingen (DE); GREIMEIER, Manja, 74321 Bietigheim-Bissingen (DE); KIEHN, Michael, 21039 Hamburg (DE); KOEHLER, Michael, 22527 Hamburg (DE)
(74) Vertreter: Pothmann, Karsten
(86) Internationale Anmeldenummer: PCT/EP2013/069421
(87) Internationale Veröffentlichungsnummer: WO 2014/095105

(56) Entgegenhaltungen:
- EP-A2- 0 290 128
- WO-A1-2012/028388
- US-A1- 2004 212 863
- US-A1- 2007 222 678
- US-A1- 2008 023 552
- US-A1- 2010 073 750
- US-A1- 2011 051 756

## Beschreibung

Die Erfindung betrifft eine optische bzw. optoelektronische Objekterfassungseinrichtung für ein Kraftfahrzeug, mit einer Sendeeinheit zum Aussenden eines Sendelichtstrahls, mit einer Empfangseinheit zum Empfangen eines Empfangslichtstrahls (also des von einem Objekt reflektierten Sendelichtstrahls), und mit einer elektronischen Auswerteeinrichtung zum Detektieren eines fahrzeugexternen Objekts in einer Umgebung des Kraftfahrzeugs abhängig von dem Empfangslichtstrahl. Die Sendeeinheit umfasst einen Sender - insbesondere eine Leserdiode - zum Erzeugen des Sendelichtstrahls, einen steuerbaren Mikrospiegel (so genannten "MEMS"), mittels welchem der Sendelichtstrahl zumindest in einer ersten Schwenkrichtung verschwenkbar ist, sowie eine im Sendestrahlengang hinter dem Mikrospiegel angeordnete Sendelinse, durch welche der vom Mikrospiegel umgelenkte Sendelichtstrahl hindurch ausgesendet wird. Die Erfindung betrifft außerdem ein Kraftfahrzeug, nämlich insbesondere einen Personenkraftwagen, mit einer solchen Objekterfassungseinrichtung.

Das Interesse gilt vorliegend insbesondere einem Laserscanner, bei welchem ein Mikrospiegel, der so genannte MEMS, eingesetzt wird, mittels welchem die Sendelichtstrahlen umgelenkt werden können, bevor sie über eine Sendelinse ausgesendet werden. Es ist bereits Stand der Technik, einen solchen Mikrospiegel zum Verschwenken des Sendestrahls einzusetzen, um insgesamt einen relativ breiten Erfassungsbereich zu erzielen und einen entsprechend breiten Umgebungsbereich abtasten zu können. Mittels einer solchen Objekterfassungseinrichtung kann die Umgebung des Kraftfahrzeugs abgetastet werden, und es können Objekte in der Umgebung detektiert werden, welche gegebenenfalls Hindernisse für das Kraftfahrzeug darstellen können.

Ein Lidar-System zum Abtasten der Umgebung eines Kraftfahrzeugs ist beispielsweise bereits aus dem Dokument EP 2 124 069 B1 bekannt. Auch hier wird ein MEMS-Spiegel verwendet, welcher in zwei verschiedene Schwenkrichtungen schwenkbar angeordnet ist und somit um zwei Achsen verschwenkt werden kann. Dieses Lidar-System hat außerdem eine speziell geformte "omnidirektionale" Sendelinse, welche das Aussenden des Sendestrahls in verschiedenste Raumrichtungen innerhalb einer gemeinsamen Ebene ermöglicht. Die Erfassung der Umgebung begrenzt sich hier also auf einen horizontalen Schnitt des dreidimensionalen Raums, sodass eine Abtastung in vertikaler Richtung nicht möglich ist. Außerdem hat dieses System auch den Nachteil, dass bei einer omnidirektionalen Linse die Leistung des Sendestrahles auf unterschiedliche Richtungen aufgeteilt werden muss und folglich ein sehr empfindlicher Empfänger benötigt wird, welcher dazu in der Lage sein muss, eine sehr geringe Leistung des Empfangsstrahls zu detektieren.

In der US 2007/0222678 A1 ist ein Lidar-Gerät mit einer Projektionslinseneinrichtung und einem MEMS-Spiegel offenbart.

Die US 2004/0212863 A1 zeigt ein Verfahren und eine Vorrichtung zum optischen Scannen einer Szene.

Die EP 0 290 128 A2 zeigt ein Laser-Radar-System mit einem Interferometer.

Dokument US 2008/023552 A1 offenbart einen Barcodescanner mit einem MEMS-Spiegel zum Auslenken von Lichtstrahlen. Die ausgelenkten Lichtstrahlen werden durch eine afokale Linse transmittiert und treffen dann auf einen Barcode.

WO 2012/028388 A1 betrifft eine Messeinheit zum Ermitteln einer relativen Position und relativen Orientierung zwischen der Messeinheit und einer Anordnung von mindestens drei optischen Elementen, wobei die mindestens drei optischen Elemente in bekannten Abständen voneinander angeordnet sind. Hierzu werden von einer Längenmesseinrichtung Messstrahlen ausgesendet, die zeitsequentiell mittels einer Strahllenkeinrichtung auf die optischen Elemente gelenkt werden. Eine solche Messeinheit ist dazu ausgelegt, um in der industriellen Fertigung oder der quantitativen Qualitätskontrolle in der industriellen Produktion eingesetzt zu werden.

MEMS-Spiegel werden im Stand der Technik auch zu ganz anderen Zwecken genutzt, nämlich bei der Erzeugung von Bildern mithilfe eines Projektors. Solche Bildprojektoren sind beispielsweise aus den Dokumenten US 2012/0069415 A1 und JP 2007 317 109 A bekannt.

Es ist Aufgabe der Erfindung, eine Lösung aufzuzeigen, wie eine optische Objekterfassungseinrichtung der eingangs genannten Gattung im Vergleich zum Stand der Technik verbessert werden kann.

Diese Aufgabe wird erfindungsgemäß durch eine Objekterfassungseinrichtung, wie auch durch ein Kraftfahrzeug mit den Merkmalen gemäß den jeweiligen unabhängigen

Patentansprüchen gelöst. Vorteilhafte Ausführungen der Erfindung sind Gegenstand der abhängigen Patentansprüche, der Beschreibung und der Figuren.

Eine erfindungsgemäße optische Objekterfassungseinrichtung für ein Kraftfahrzeug umfasst eine Sendeeinheit zum Aussenden eines Sendelichtstrahls, wie auch eine Empfangseinheit zum Empfangen eines Empfangslichtstrahls sowie eine elektronische Auswerteeinrichtung zum Detektieren eines fahrzeugexternen Objekts in einer Umgebung des Kraftfahrzeugs abhängig von dem Empfangslichtstrahl. Die Sendeeinheit hat einen Sender - beispielsweise eine Laserdiode - zum Erzeugen des Sendelichtstrahls. Die Sendeeinheit hat außerdem einen steuerbaren Mikrospiegel (MEMS), mittels welchem der Sendelichtstrahl zumindest in einer ersten Schwenkrichtung verschwenkbar ist und somit zumindest in der ersten Schwenkrichtung die Umgebung abtasten kann. Dies bedeutet, dass der Mikrospiegel zumindest in der ersten Schwenkrichtung - beispielsweise in horizontaler Richtung - schwenkbar angeordnet ist. Die Sendeeinheit weist des Weiteren eine Sendelinse auf, welche im Sendestrahlengang bzw. Sendepfad hinter dem Mikrospiegel angeordnet ist und über welche somit der vom Mikrospiegel umgelenkte Sendelichtstrahl ausgesendet wird. Zumindest entlang der ersten Schwenkrichtung ist die Sendelinse als Konkav-Konvex-Linse ausgebildet, welche einerseits eine konkav gekrümmte Oberfläche, welche dem Mikrospiegel zugewandt ist, und andererseits eine konvex gekrümmte Oberfläche aufweist, welche insbesondere der

Umgebung zugewandt ist, wobei zumindest entlang der ersten Schwenkrichtung ein Krümmungsradius der konkav gekrümmten Oberfläche kleiner als ein Krümmungsradius der konvex gekrümmten Oberfläche der Sendelinse ist.

Gemäß einem Aspekt der vorliegenden Erfindung wird demnach vorgeschlagen, eine Sendelinse einzusetzen, welche zumindest in der ersten Schwenkrichtung als Meniskuslinse ausgebildet ist. Eine solche Meniskuslinse hat einerseits eine konkave Oberfläche und somit eine Einbuchtung und andererseits eine konvexe und somit gewölbte Oberfläche. Der Einsatz einer derartigen Sendelinse erweist sich insbesondere in Verbindung mit dem Mikrospiegel als besonders vorteilhaft. Zwar kann mithilfe einer solchen Meniskuslinse möglicherweise keine omnidirektionale Erfassung bzw. 360°-Erfassung ermöglicht werden, wie sie im Gegenstand gemäß Dokument EP 2 124 069 B1 erzielt wird, jedoch ist mithilfe einer derartigen Meniskuslinse neben einem relativ breiten Erfassungsbereich bzw. Erfassungswinkel in der ersten Schwenkrichtung gegebenenfalls auch eine Abtastung der Umgebung in einer dazu senkrechten zweiten Richtung möglich. Eine Abtastung der Umgebung ist somit nicht nur entlang eines horizontalen Schnitts des Raums möglich, sondern gegebenenfalls auch senkrecht dazu, also beispielsweise in vertikaler Richtung. Ein großer Vorteil einer solchen Meniskuslinse besteht auch darin, dass der Sendelichtstrahl mit einer im Vergleich zur omnidirektionalen Erfassung größeren Strahlungsstärke ausgesendet werden kann, sodass insgesamt auch ein weniger empfindlicher Empfänger eingesetzt werden kann bzw. der Empfangslichtstrahl noch eine Strahlungssträrke aufweist, die ohne viel Aufwand detektiert werden kann. Insbesondere ist die Sendelinse in Bezug auf den Mikrospiegel so angeordnet, dass die optische Längsachse der Sendelinse durch den Mikrospiegel verläuft.

Zumindest entlang der ersten Schwenkrichtung ist es vorgesehen dass ein Krümmungsradius der konkav gekrümmten Oberfläche, also der dem Mikrospiegel zugewandten Oberfläche der Sendelinse, kleiner als ein Krümmungsradius der konvexen Oberfläche ist. Somit ist die bezüglich des Mikrospiegels äußere Oberfläche der Sendelinse weniger gekrümmt als die dem Mikrospiegel zugewandte innere Oberfläche der Sendelinse. Diese Ausführungsform begegnet der Problematik, dass die zur Verfügung stehenden MEMS-Spiegel üblicherweise in einem Winkelbereich verschwenkbar sind, welcher geringer als 180° ist. Die bekannten MEMS-Spiegel können nämlich üblicherweise innerhalb eines Winkelbereichs von etwa 100° oder weniger verschwenkt werden. Weil somit die Auslenkung der verfügbaren MEMS-Spiegel begrenzt ist, schlägt die vorliegende Ausführungsform vor, die Sendelinse entsprechend so auszugestalten, dass diese einen Erfassungswinkel bzw. Öffnungswinkel von beispielsweise 180° ermöglicht. Mit einer entsprechenden Form der Sendelinse kann somit selbst dann ein größerer Öffnungswinkel der Erfassungseinrichtung in der ersten Schwenkrichtung erzielt werden, wenn die Auslenkung des Mikrospiegels entsprechend begrenzt ist. Dies wird durch die unterschiedlichen Krümmungsradien der beiden Oberflächen ermöglicht.

Also kann in einer Ausführungsform vorgesehen sein, dass der Erfassungswinkel bzw. Öffnungswinkel der Sendeeinheit in der ersten Schwenkrichtung in einem Wertebereich von 160° bis 180° liegt und beispielsweise 180° beträgt. Mit einer einzelnen Objekterfassungseinrichtung kann somit ein besonders großer Erfassungsbereich des Kraftfahrzeugs abgetastet werden. Mit einer einzelnen Erfassungseinrichtung können somit nicht nur Objekte detektiert werden, die sich beispielsweise im Bereich des toten Winkels befinden, sondern auch diejenigen Objekte, die sich in Fahrtrichtung vor dem Kraftfahrzeug befinden. Die Objekterfassungseinrichtung kann somit für unterschiedliche Fahrerassistenzsysteme im Kraftfahrzeug eingesetzt werden.

Bevorzugt ist die erste Schwenkrichtung eine horizontale Richtung. Im verbauten Zustand der Objekterfassungseinrichtung ist der Mikrospiegel somit in horizontaler Richtung verschwenkbar, also um die vertikale Achse. Die erste Schwenkrichtung ist folglich eine Azimutrichtung.

Die Vorteile der Erfindung kommen dann vollständig zum Tragen, wenn der Mikrospiegel insgesamt in zwei verschiedene Richtungen schwenkbar gelagert ist, und zwar neben der ersten Schwenkrichtung zusätzlich auch in einer senkrecht dazu verlaufenden zweiten Schwenkrichtung. Somit ist der Sendelichtstrahl auch in der zweiten Schwenkrichtung verschwenkbar. Die zweite Schwenkrichtung ist somit bevorzugt die vertikale Richtung bzw. die Elevationsrichtung, sodass der Sendelichtstrahl sowohl in horizontaler als auch in vertikaler Richtung verschwenkt und die Umgebung somit horizontal und vertikal abgetastet werden kann. Insbesondere kann vorgesehen sein, dass die Krümmungsradien der jeweiligen Oberflächen der Sendelinse in der zweiten (vertikalen) Schwenkrichtung gleich sind. Alternativ kann jedoch auch vorgesehen sein, dass - ähnlich wie entlang der ersten Schwenkrichtung - die Krümmungsradien unterschiedlich sind und hierbei beispielsweise der Krümmungsradius der konkaven Oberfläche kleiner als der Krümmungsradius der äußeren konvexen Oberfläche ist. Auch in der zweiten Schwenkrichtung ist die Sendelinse somit vorzugsweise eine Meniskuslinse.

Bevorzugt ist der Erfassungswinkel der Sendeeinheit in der zweiten Schwenkrichtung kleiner als der Erfassungswinkel in der ersten Schwenkrichtung. Insbesondere ist somit vorgesehen, dass der Azimut-Erfassungswinkel der Objekterfassungseinrichtung größer als der Elevations-Erfassungswinkel ist. Somit können mit der Objekterfassungseinrichtung die relevanten Umgebungsbereiche des Kraftfahrzeugs besonders schnell auf gegebenenfalls vorhandene Hindernisse überprüft werden, und die Reaktionszeit des Systems ist besonders kurz.

In einer Ausführungsform liegt der Erfassungswinkel der Sendeeinheit in der zweiten Schwenkrichtung beispielsweise in einem Wertebereich von 5° bis 30°. Dieser Erfassungswinkel kann beispielsweise 5° oder 10° oder 15° oder 20° oder 25° oder 30° betragen.

Die Umgebung des Kraftfahrzeugs kann mithilfe der optischen Objekterfassungseinrichtung entweder spaltenweise oder aber zeilenweise erfasst werden. Bei einer Abtastung der Umgebung spaltenweise wird der Sendelichtstrahl in vertikaler Richtung abwechselnd zwischen dem einen und dem anderen Rand des vertikalen Erfassungswinkels verschwenkt, während in horizontaler Richtung eine langsamere Bewegung des Mikrospiegels stattfindet. Der Vorgang des Abtastens erfolgt hier orthogonal zum horizontalen Erfassungswinkel. Demgegenüber wird bei einer Abtastung der Umgebung zeilenweise der Sendelichtstrahl in horizontaler Richtung hin und her zwischen dem ersten und dem zweiten Rand des horizontalen Öffnungswinkels verschwenkt, während in vertikaler Richtung der Mikrospiegel deutlich langsamer bewegt wird. Hier erfolgt der Vorgang des Abtastens also parallel zum horizontalen Öffnungswinkel. Während also in horizontaler Richtung mehrere Schwenkperioden des Mikrospiegels durchlaufen werden, durchläuft der Mikrospiegel in derselben Zeitdauer in vertikaler Richtung den gesamten Winkelbereich des vertikalen Erfassungswinkels lediglich einmal.

In einer Ausführungsform ist vorgesehen, dass die Sendelinse einen Teil - beispielsweise eine Abdeckung bzw. einen Deckel - eines Gehäuses der Sendeeinheit bildet. Mittels der Sendelinse wird somit der Mikrospiegel auch vor äußeren Einflüssen geschützt. Die Sendelinse übernimmt also zwei verschiedene Funktionen, nämlich einerseits die Funktion der optischen Linse und andererseits auch die Funktion eines Gehäuseteils.

Hinsichtlich der Ausgestaltung der Empfangseinheit können folgende Ausführungsformen vorgesehen sein:
Im verbauten Zustand der Objekterfassungseinrichtung im Kraftfahrzeug kann die Empfangseinheit über der Sendeeinheit oder aber unterhalb der Sendeeinheit angeordnet sein. Dies bedeutet, dass die Empfangseinheit und die Sendeeinheit entlang der Vertikalen bzw. entlang der Fahrzeughochrichtung verteilt angeordnet sind.

Bevorzugt umfasst die Empfangseinheit eine Mehrzahl von Empfangselementen, insbesondere Photodioden, wie auch eine, insbesondere von der Sendelinse separate, und für die Mehrzahl der Empfangselemente gemeinsame Empfangslinse, welche im Empfangsstrahlengang vor den Empfangselementen angeordnet ist. Die Empfangslinse kann als Konvex-Konkav-Linse mit einer konvex gekrümmten äußeren Oberfläche sowie mit einer konkav gekrümmten inneren Oberfläche ausgebildet sein, welche (die konkav gekrümmte Oberfläche) den Empfangselementen zugewandt ist. Die Empfangselemente sind bevorzugt Avalanche-Photodioden. Die Empfangslinse ist also ebenfalls - zumindest in der ersten Schwenkrichtung - eine Meniskuslinse, welche für alle Empfangselemente verwendet wird. Mit einer solchen Empfangslinse kann auf ein Scannen bzw. Abtasten des Empfängers verzichtet werden, sodass sich der Einsatz eines entsprechenden Mikrospiegels beim Empfänger erübrigt.

Die Empfangslinse und die Sendelinse sind bevorzugt gleiche bzw. identische und voneinander separate Linsen. Somit ist der Aufwand bezüglich der verwendeten Linsentypen minimal.

Alternativ kann jedoch auch vorgesehen sein, dass eine gemeinsame Linse als Empfangslinse und Sendelinse eingesetzt wird. Diese gemeinsame Linse kann dann sowohl den Mikrospiegel als auch die Empfangselemente überlappen.

Durch den Einsatz einer für alle Empfangselemente gemeinsamen Empfangslinse kann es vorkommen, dass sich insgesamt das Signal-Rausch-Verhältnis verschlechtert, weil die Empfangselemente immer den gesamten Erfassungsbereich erfassen. Daraus ergibt sich eine deutlich größere Belastung mit Fremdlicht als bei einem Empfänger mit einem Mikrospiegel, während die empfangene Signalleistung im Vergleich zu einem System, dessen Empfänger abgetastet wird, gleich bleibt. Somit müsste die Detektionsschwelle grundsätzlich erhöht werden, was zu einer kleineren Empfindlichkeit der Erfassungseinrichtung führen würde. Dies wiederum würde zu einer geringeren Reichweite führen. Um dem zu begegnen, ist in einer Ausführungsform vorgesehen, dass die Empfangselemente entlang einer in der ersten Schwenkrichtung verlaufenden gedachten Krümmungslinie verteilt angeordnet sind. Mit anderen Worten sind die Empfangselemente hinter der Empfangslinse entlang eines Ringabschnitts bzw. ringsegmentförmig verteilt angeordnet. Diese Krümmungslinie kann dabei parallel zu der konkaven Oberfläche der Empfangslinse verlaufen. Durch eine solche Verteilung der Vielzahl von Empfangselementen wird erreicht, dass ein einzelnes Empfangselement Licht lediglich aus einer bestimmten Richtung empfangen kann und für andere Einfallsrichtungen des Lichts "blind" ist. Somit wird auch weniger Fremdlicht empfangen, und das Signal-Rausch-Verhältnis wird insgesamt verbessert.

Um diese Richtwirkung der einzelnen Empfangselemente weiterhin zu verbessern, kann jedem Empfangselement auch eine separate Mikrolinse zugeordnet sein, welche im Empfangsstrahlengang vor dem jeweiligen Empfangselement angeordnet ist. Diese Mikrolinsen sind also zwischen den Empfangselementen einerseits und der Empfangslinse andererseits angeordnet.

Die Erfindung betrifft auch ein Kraftfahrzeug mit einer erfindungsgemäßen Objekterfassungseinrichtung.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels, wie auch unter Bezugnahme auf die beigefügten Zeichnungen näher erläutert.

Es zeigen:
- Fig. 1: in schematischer Darstellung ein Blockschaltbild einer optischen Objekterfassungseinrichtung gemäß einer Ausführungsform der Erfindung;
- Fig. 2: in schematischer Darstellung eine Sendeeinheit der Objekterfassungseinrichtung gemäß einer Ausführungsform;
- Fig. 3: in schematischer Darstellung eine Empfangseinheit der Objekterfassungseinrichtung;
- Fig. 4 bis 7: verschiedenste Möglichkeiten, die Objekterfassungseinrichtung an einem Kraftfahrzeug anzubringen; und
- Fig. 8 und 9: in schematischer Darstellung verschiedene Abtastmöglichkeiten der Umgebung, wobei zwischen einer Abtastung zeilenweise und spaltenweise unterschieden wird.

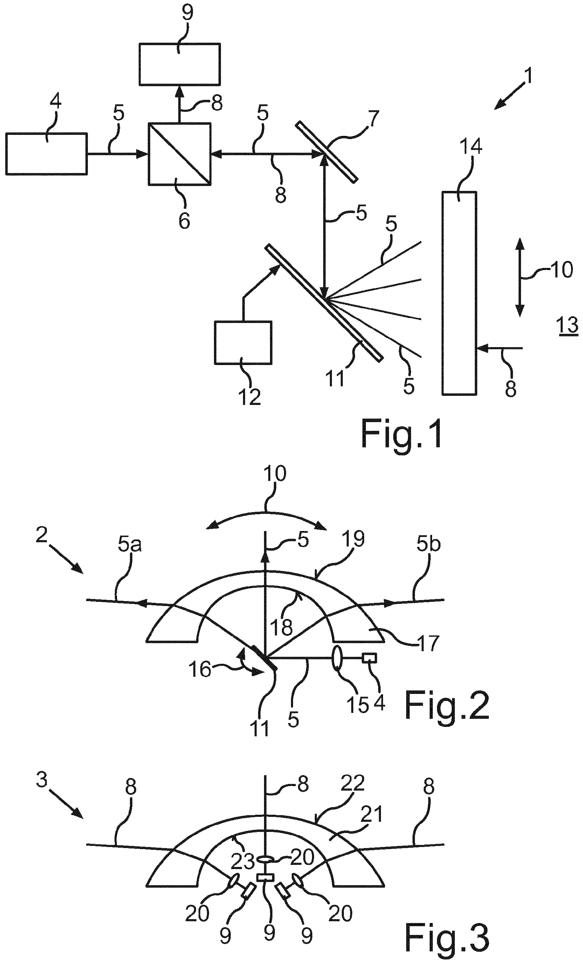

In Fig. 1 ist in schematischer Darstellung ein Blockschaltbild einer optischen Objekterfassungseinrichtung 1 gemäß einer Ausführungsform der Erfindung dargestellt. Die Objekterfassungseinrichtung 1 kann in einem Kraftfahrzeug verbaut werden, nämlich beispielsweise in einem Personenkraftwagen. Die Objekterfassungseinrichtung 1 umfasst im Allgemeinen eine Sendeeinheit 2 (Fig. 2) sowie eine Empfangseinheit 3 (Fig. 3). Zur Sendeeinheit 2 gehört ein Sender 4, nämlich insbesondere ein Laser, welcher zum Erzeugen eines Sendelichtstrahls 5 ausgebildet ist. Der Sendelichtstrahl 5 kann also ein Laserstrahl sein.

Im Sendestrahlengang ist dem Sender 4 eine optische Weiche 6 nachgeordnet, welche zwei Funktionen hat: Zum einen kann die Weiche 6 den Sendelichtstrahl 5 durchlassen, sodass der Sendelichtstrahl 5 sich hin zu einem festen Spiegel 7 ausbreiten kann. Zum anderen kann die Weiche 6 auch einen Empfangslichtstrahl 8 auf zumindest ein Empfangselement 9 umlenken.

Der feste Spiegel 7 ist also sowohl im Sendestrahlengang als auch im Empfangsstrahlengang angeordnet.

Zum Verschwenken des Sendelichtstrahls 5 in einer ersten Schwenkrichtung 10 ist ein Mikrospiegel 11 (MEMS) vorgesehen, welcher mithilfe einer elektronischen Steuereinrichtung 12 angesteuert wird. Der Mikrospiegel 11 kann den Sendelichtstrahl 5 also umlenken und so einen größeren Bereich einer Umgebung 13 in der ersten Schwenkrichtung 10 abtasten. Im Sendestrahlengang befindet sich außerdem eine Linsenanordnung 14, welche beispielsweise eine Sendelinse sowie eine womöglich separate Empfangslinse aufweisen kann. Alternativ kann auch eine gemeinsame Linse sowohl für den Sendelichtstrahl 5 als auch für den Empfangslichtstrahl 8 vorgesehen sein.

Gegebenenfalls kann auch auf den festen Spiegel 7 verzichtet werden, und das Licht kann sich unmittelbar zwischen der Weiche 6 und dem Mikrospiegel 11 ausbreiten. In diesem Falle wird die Anordnung des Mikrospiegels 11 bezüglich der Weiche 6 entsprechend angepasst.

Auch der Einsatz einer Weiche 6 ist grundsätzlich optional. So können der Sendestrahlengang sowie Empfangsstrahlengang vollständig voneinander entkoppelt sein, sodass der Mikrospiegel 11 ausschließlich für den Sendelichtstrahl 5 verwendet wird, während für den Empfangsstrahlengang 8 ein separater Mikrospiegel oder aber gar kein Mikrospiegel verwendet wird.

Die Linsenanordnung 14 ist in Fig. 1 lediglich beispielhaft angedeutet. Wie bereits ausgeführt, kann diese Anordnung 14 eine separate Sendelinse und Empfangslinse oder aber eine gemeinsame Linse für den Sendelichtstrahl 5 sowie den Empfangslichtstrahl 8 aufweisen. Nachfolgend wird ein Ausführungsbeispiel näher beschrieben, bei welchem zwei separate Linsen eingesetzt werden sowie lediglich die Sendeeinheit 2 einen Mikrospiegel 11 aufweist, während die Empfangseinheit 3 ohne einen solchen Mikrospiegel auskommt, so dass der Empfangslichtstrahl 8 nicht verschwenkt wird.

Bezug nehmend auf Fig. 2 beinhaltet die Sendeeinheit 2 den Sender 4, welcher den Sendelichtstrahl 5 erzeugt. Der Sendelichtstrahl 5 breitet sich über eine Linse ggf. Mikrolinse 15 aus, welche eine Sendeoptik darstellt. Die Mikrolinse 15 ist zwischen dem Sender 4 einerseits und dem schwenkbaren Mikrospiegel 11 andererseits angeordnet. Der Mikrospiegel 11 ist in einer ersten Schwenkrichtung 16 um eine senkrecht zur Zeichnungsebene verlaufende Achse schwenkbar gelagert. Somit kann der Sendelichtstrahl 5 in der ersten Schwenkrichtung 10 verschwenkt werden. Die erste Schwenkrichtung 10 ist dabei die horizontale Richtung, sodass der Mikrospiegel 11 um die Vertikale verschwenkbar angeordnet ist. Die Zeichnungsebene stellt also eine horizontale Ebene dar.

Zusätzlich kann der Mikrospiegel 11 auch um eine zweite Schwenkachse schwenkbar sein, nämlich um eine horizontale Achse. Somit ist der Sendelichtstrahl 5 auch in einer zweiten Schwenkrichtung - nämlich in der vertikalen Richtung - verschwenkbar. Der Sendelichtstrahl 5 ist somit einerseits in Azimut (horizontale Richtung) und andererseits in Elevation (vertikale Richtung) verschwenkbar.

Die Auslenkung des Mikrospiegels 11 in der Schwenkrichtung 16 ist insgesamt beispielsweise auf 90° oder 100° beschränkt. Um nun in der ersten Schwenkrichtung 10 insgesamt einen Öffnungswinkel der Sendeeinheit 2 von beispielsweise 180° zu erzielen, wird eine Sendelinse 17 eingesetzt, durch welche der Sendelichtstrahl 5 hindurch ausgesendet wird. Diese Linse 17 liegt also im Ausbreitungspfad des Sendelichtstrahls 5 hinter dem Mikrospiegel 11. Die Sendelinse 17 ist dabei eine Meniskuslinse und hat eine konkav gekrümmte innere Oberfläche 18, welche dem Mikrospiegel 11 zugewandt ist, wie auch eine äußere und konvex gekrümmte Oberfläche 19. Beide Oberflächen 18, 19 können beispielsweise Oberflächenbereiche einer Kugel sein, wobei der Krümmungsradius der konkaven Oberfläche 18 geringer als der Krümmungsradius der konvexen Oberfläche 19 ist. Der Mikrospiegel 11 liegt an einer mittleren optischen Längsachse der Sendelinse 17.

Durch eine derartige Ausgestaltung der Sendelinse 17 wird erreicht, dass auch bei einer begrenzten Auslenkung des Mikrospiegels 11 in Schwenkrichtung 16 insgesamt ein Öffnungswinkel von 180° in der ersten Schwenkrichtung 10 erzielt werden kann. Dies ist durch die Brechung der Sendelichtstrahlen 5 an den jeweiligen Oberflächen 18, 19 der Sendelinse 17 möglich. Wie aus Fig. 2 hervorgeht, kann in einer äußersten Position des Mikrospiegels 11 ein Sendelichtstrahl 5a ausgesendet werden, welcher mit einem weiteren Lichtstahl 5b einen Winkel von etwa 180° einschließt. Der zweite Sendelichtstahl 5b wird in der zweiten äußersten Position des Mikrospiegels 11 ausgesendet.

Der Sender 4 kann einen gepulsten Lichtstrahl mit einer einstellbaren Frequenz bzw. Rate erzeugen. Alternativ kann jedoch grundsätzlich auch vorgesehen sein, dass von dem Sender 4 ein kontinuierlicher Sendelichtstrahl 5 erzeugt wird.

In Fig. 3 ist nun eine beispielhafte Empfangseinheit 3 dargestellt, welche zum Empfangen der Empfangslichtstrahlen 8 dient. Vorzugsweise wird hier empfangsseitig kein verschwenkbarer Mikrospiegel 11 eingesetzt. Stattdessen beinhaltet die Empfangseinheit eine Vielzahl von Empfangselementen 9, welche beispielsweise als Avalanche-Photodioden ausgebildet sind. Jedem Empfangselement 9 ist jeweils eine separate Linse ggf. Mikrolinse 20 zugeordnet, welche vor dem jeweiligen Empfangselement 9 angeordnet ist. Die Empfangseinheit 3 hat für alle Empfangselemente 9 eine gemeinsame Empfangslinse 21, welche insbesondere die gleiche Form wie die Sendelinse 17 aufweist. Die Empfangslinse 21 ist folglich eine Meniskuslinse, nämlich eine Konvex-Konkav-Linse mit einer konvex gekrümmten äußeren Oberfläche 22 und einer konkav gekrümmten inneren Oberfläche 23, welche den Empfangselementen 9 zugewandt ist. Die äußere konvexe Oberfläche 22 hat dabei einen größeren Krümmungsradius als die innere konkave Oberfläche 23. Somit können Empfangslichtstrahlen 8 aus verschiedenen Richtungen durch die Empfangseinheit 3 empfangen werden.

Die Empfangselemente 9 sind dabei entlang einer gedachten Krümmungslinie verteilt angeordnet, nämlich entlang eines Ringsegments. Eine solche ringförmige Verteilung der Empfangselemente 9 entlang einer parallel zur Oberfläche 23 verlaufenden gedachten Linie hat den Vorteil, dass jedes Empfangselement 9 Licht ausschließlich aus einer begrenzten räumlichen Richtung empfangen kann und somit kein Fremdlicht in den Bereich der einzelnen Empfangselemente 9 eingekoppelt werden kann.

Durch die Verwendung der Empfangslinse 21 hat auch die Empfangseinheit 3 einen Öffnungswinkel von 180°, sodass insgesamt der Erfassungswinkel der optischen Objekterfassungseinrichtung 1 in horizontaler Richtung 180° betragen kann. In vertikaler Richtung wiederum wird der Mikrospiegel 11 innerhalb eines Winkelbereichs von beispielsweise 10° oder 15° verschwenkt, sodass auch entsprechend der vertikale Erfassungswinkel der Objekterfassungseinrichtung 10° oder aber 15° beträgt.

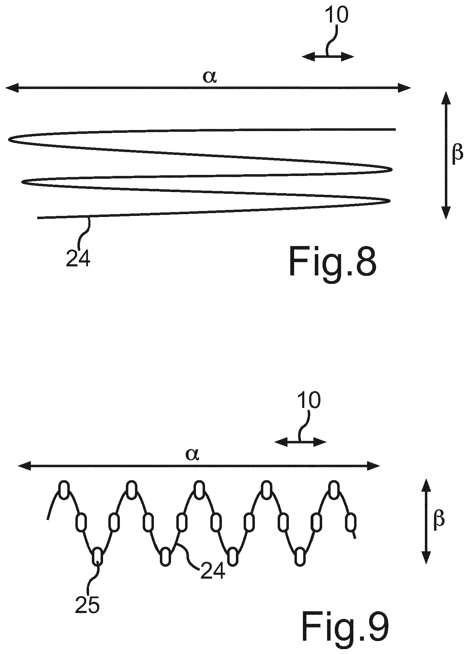

Nun sind zwei Möglichkeiten bezüglich der Abtastung der Umgebung 13 vorgesehen: Bezug nehmend auf die Fig. 8 und 9 kann die Umgebung 13 des Kraftfahrzeugs entweder zeilenweise oder aber spaltenweise erfasst werden. In Fig. 8 ist dabei der zeitliche Verlauf der Abtastung der Umgebung 13 zeilenweise schematisch dargestellt.

Der horizontale Öffnungswinkel bzw. Erfassungswinkel der Objekterfassungseinrichtung 1 ist mit α bezeichnet, während der vertikale Erfassungswinkel mit β bezeichnet ist. Die in Fig. 8 mit 24 bezeichnete Linie entspricht einem zeitlichen Verlauf eines Lichtspots des Sendelichtstrahls 5, wie er aus der Sicht der Sendeeinheit 2 gesehen wird. Hier wird der Sendelichtstrahl 5 hin und her in horizontaler Richtung bzw. in der ersten Schwenkrichtung 10 verschwenkt, während der

Mikrospiegel 11 deutlich langsamer in vertikaler Richtung bewegt wird. Das Abtasten der Umgebung 13 erfolgt hier also lateral zum horizontalen Erfassungswinkel a. Demgegenüber ist in Fig. 9 eine Abtastung der Umgebung 13 spaltenweise schematisch dargestellt. Hier erfolgt das Abtasten der Umgebung 13 senkrecht zum horizontalen Öffnungswinkel α, also in vertikaler Richtung. Der Sendelichtstrahl 5 wird hier in vertikaler Richtung hin und her deutlicher schneller als in horizontaler Richtung verschwenkt. In Fig. 9 sind zusätzlich beispielhafte Abtastpunkte 25 dargestellt, an denen die Umgebung 13 mithilfe des Sendelichtstrahls 5 abgetastet werden kann.

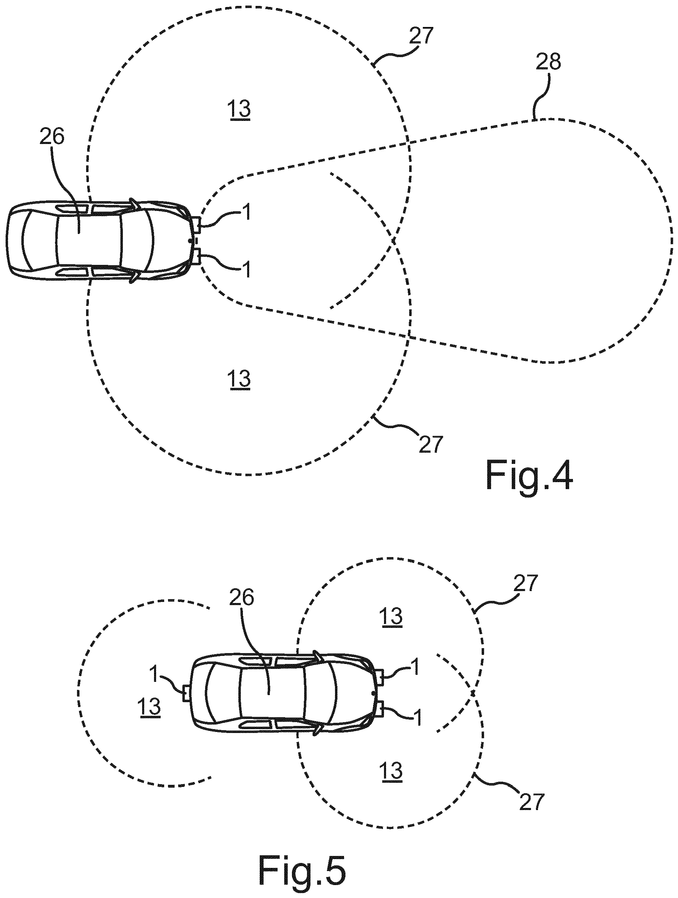

In den Fig. 4 bis 7 sind nun mögliche Einbaupositionen der Objekterfassungseinrichtung 1 an einem Kraftfahrzeug 26 und die daraus resultierenden Erfassungsbereiche 27 näher dargestellt. In Fig. 4 sind zwei genannte Objekterfassungseinrichtungen 1 im vorderen Bereich des Kraftfahrzeugs 26 angeordnet. Die linke Objekterfassungseinrichtung 1 erfasst die Umgebung 13 vor dem Kraftfahrzeug 26 sowie auf der linken Seite des Kraftfahrzeugs 26, während die rechte Objekterfassungseinrichtung 1 die Umgebung 13 auf der rechten Seite sowie vor dem Kraftfahrzeug 26 erfasst. Die Reichweite der Objekterfassungseinrichtungen 1 beträgt beispielsweise 30 m. Zusätzlich ist im Frontbereich des Kraftfahrzeugs 26 auch eine weitere Laser-Erfassungseinrichtung oder aber ein Radargerät mit einem geringeren Erfassungswinkel in horizontaler Richtung vorgesehen. Der schmalere Erfassungsbereich ist hier mit 28 bezeichnet.

In Fig. 5 ist neben den beiden vorderen Objekterfassungseinrichtungen 1 zusätzlich eine optische Objekterfassungseinrichtung 1 im Heckbereich des Kraftfahrzeugs 26 angeordnet. Diese erfasst den Umgebungsbereich 13 hinter dem Kraftfahrzeug 26.

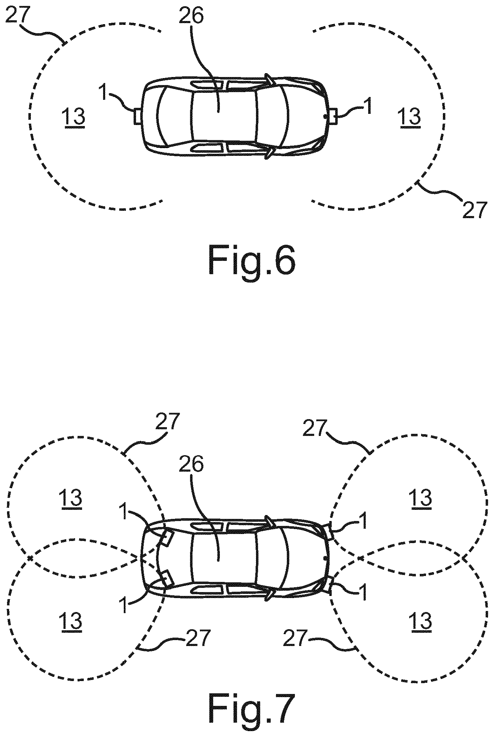

In Fig. 6 ist ein Kraftfahrzeug 26 dargestellt, welches jeweils eine Objekterfassungseinrichtung 1 sowohl im Frontbereich als auch im Heckbereich aufweist. Die eine Objekterfassungseinrichtung 1 erfasst symmetrisch die Umgebung 13 vor dem Kraftfahrzeug 26. Demgegenüber erfasst die andere Objekterfassungseinrichtung 1 die Umgebung 13 hinter dem Kraftfahrzeug 26.

Schließlich zeigt Fig. 7 ein Kraftfahrzeug 26 mit insgesamt vier Objekterfassungseinrichtungen 1, welche jedoch einen etwas geringeren horizontalen Erfassungswinkel aufweisen. Die Objekterfassungseinrichtungen 1 erfassen hier die jeweiligen Umgebungsbereiche 13 neben den vier Ecken des Kraftfahrzeugs 26.

## Patentansprüche

1. Optische Objekterfassungseinrichtung (1) für ein Kraftfahrzeug (26), mit einer Sendeeinheit (2) zum Aussenden eines Sendelichtstrahls (5), mit einer Empfangseinheit (3) zum Empfangen eines Empfangslichtstrahls (8), und mit einer elektronischen Auswerteeinrichtung zum Detektieren eines fahrzeugexternen Objektes in einer Umgebung des Kraftfahrzeugs (26) abhängig von dem Empfangslichtstrahl (8), wobei die Sendeeinheit (2) einen Sender (4) zum Erzeugen des Sendelichtstrahls (5), einen steuerbaren Mikrospiegel (11), mittels welchem der Sendelichtstrahl (5) zumindest in einer ersten Schwenkrichtung (10) verschwenkbar ist, und eine Sendelinse (17) aufweist, **dadurch gekennzeichnet, dass** die Sendelinse (17) im Sendestrahlengang hinter dem Mikrospiegel (11) angeordnet ist und zumindest entlang der ersten Schwenkrichtung (10) als Konkav-Konvex-Linse mit einer konkav gekrümmten Oberfläche (18), welche dem Mikrospiegel (11) zugewandt ist, und mit einer konvex gekrümmten Oberfläche (19) ausgebildet ist, wobei zumindest entlang der ersten Schwenkrichtung (10) ein Krümmungsradius der konkav gekrümmten Oberfläche (18) kleiner als ein Krümmungsradius der konvex gekrümmten Oberfläche (19) der Sendelinse (17) ist.

2. Objekterfassungseinrichtung (1) nach Anspruch 1,
**dadurch gekennzeichnet, dass**
ein Erfassungswinkel (α) der Sendeeinheit (2) in der ersten Schwenkrichtung (10) in einem Wertebereich von 160° bis 180° liegt, insbesondere 180° beträgt.

3. Objekterfassungseinrichtung (1) nach einem der vorhergehenden Ansprüche,
**dadurch gekennzeichnet, dass**
die erste Schwenkrichtung (10) eine horizontale Richtung ist.

4. Objekterfassungseinrichtung (1) nach einem der vorhergehenden Ansprüche,
**dadurch gekennzeichnet, dass**
der Mikrospiegel (11) zusätzlich in einer senkrecht zur ersten Schwenkrichtung (10) verlaufenden zweiten Schwenkrichtung schwenkbar angeordnet ist, so dass der Sendelichtstrahl (5) auch in der zweiten Schwenkrichtung verschwenkbar ist.

5. Objekterfassungseinrichtung (1) nach Anspruch 4,
**dadurch gekennzeichnet, dass**
ein Erfassungswinkel (β) der Sendeeinheit (2) in der zweiten Schwenkrichtung kleiner als ein Erfassungswinkel (α) der Sendeeinheit (2) in der ersten Schwenkrichtung (10) ist.

6. Objekterfassungseinrichtung (1) nach Anspruch 4 oder 5,
**dadurch gekennzeichnet, dass**
ein Erfassungswinkel (β) der Sendeeinheit (2) in der zweiten Schwenkrichtung in einem Wertebereich von 5° bis 30° liegt.

7. Objekterfassungseinrichtung (1) nach einem der vorhergehenden Ansprüche,
**dadurch gekennzeichnet, dass**
die Sendelinse (17) ein Teil eines Gehäuses der Sendeeinheit (2) bildet.

8. Objekterfassungseinrichtung (1) nach einem der vorhergehenden Ansprüche,
**dadurch gekennzeichnet, dass**
die Empfangseinheit (3) eine Mehrzahl von Empfangselementen (9), insbesondere Photodioden, und eine für die Mehrzahl der Empfangselemente (9) gemeinsame Empfangslinse (21) aufweist, welche im Empfangsstrahlengang vor den Empfangselementen (9) angeordnet ist, wobei die Empfangslinse (21) als Konvex-Konkav-Linse mit einer konvex gekrümmten Oberfläche (22) und mit einer konkav gekrümmten Oberfläche (23), welche den Empfangselementen (9) zugewandt ist, ausgebildet ist.

9. Objekterfassungseinrichtung (1) nach Anspruch 8,
**dadurch gekennzeichnet, dass**
die Empfangslinse (21) und die Sendelinse (17) gleiche Linsen sind.

10. Objekterfassungseinrichtung (1) nach Anspruch 8 oder 9,
**dadurch gekennzeichnet, dass**
die Empfangselemente (9) entlang einer in der ersten Schwenkrichtung (10) verlaufenden gedachten Krümmungslinie verteilt angeordnet sind.

11. Kraftfahrzeug (26) mit einer Objekterfassungseinrichtung (1) nach einem der vorhergehenden Ansprüche.

## Claims

1. Optical object sensing device (1) for a motor vehicle (26), having an emitter unit (2) for emitting an emission light beam (5) and having a receiver unit (3) for receiving a reception light beam (8), and having an electronic evaluation device for detecting an object external to the vehicle in a vicinity of the motor vehicle (26) as a function of the reception light beam (8), the emitter unit (2) comprising an emitter (4) for generating the emission light beam (5), a controllable micromirror (11) by means of which the emission light beam (5) can be panned at least in a first panning direction (10), and an emission lens (17), **characterized in that** the emission lens (17) is arranged in the emission beam path behind the micromirror (11) and, at least along the first panning direction (10), is configured as a concave-convex lens with a concavely curved surface (18), which faces towards the micromirror (11), and with a convexly curved surface (19), wherein, at least along the first panning direction (10), a radius of curvature of the concavely curved surface (18) is less than a radius of curvature of the convexly curved surface (19) of the emission lens (17) .

2. Object sensing device (1) according to Claim 1, **characterized in that**
a sensing angle (α) of the emitter unit (2) in the first panning direction (10) lies in a value range of from 160° to 180°, and is in particular 180°.

3. Object sensing device (1) according to either of the preceding claims,
**characterized in that**
the first panning direction (10) is a horizontal direction.

4. Object sensing device (1) according to any one of the preceding claims,
**characterized in that**
the micromirror (11) is additionally arranged so that it can be panned in a second panning direction extending perpendicularly to the first panning direction (10), so that the emission light beam (5) can also be panned in the second panning direction.

5. Object sensing device (1) according to Claim 4, **characterized in that**
a sensing angle (β) of the emitter unit (2) in the second panning direction is less than a sensing angle (α) of the emitter unit (2) in the first panning direction (10).

6. Object sensing device (1) according to Claim 4 or 5,
**characterized in that**
a sensing angle (β) of the emitter unit (2) in the second panning direction lies in a value range of from 5° to 30°.

7. Object sensing device (1) according to any one of the preceding claims,
**characterized in that**
the emission lens (17) forms a part of a housing of the emitter unit (2).

8. Object sensing device (1) according to any one of the preceding claims,
**characterized in that**
the receiver unit (3) comprises a multiplicity of reception elements (9), in particular photodiodes, and a common reception lens (21) for the multiplicity of reception elements (9), which is arranged before the reception elements (9) in the reception beam path, the reception lens (21) being configured as a convex-concave lens with a convexly curved surface (22) and with a concavely curved surface (23), which faces towards the reception elements (9).

9. Object sensing device (1) according to Claim 8, **characterized in that**
the reception lens (21) and the emission lens (17) are the same lenses.

10. Object sensing device (1) according to Claim 8 or 9,
**characterized in that**
the reception elements (9) are arranged distributed along an imaginary line of curvature extending in the first panning direction (10).

11. Motor vehicle (26) having an object sensing device (1) according to any one of the preceding claims.

## Revendications

1. Dispositif optique de détection d'objets (1) pour un véhicule automobile (26), comprenant une unité d'émission (2) servant à émettre un faisceau lumineux d'émission (5), une unité de réception (3) servant à recevoir un faisceau lumineux de réception (8), et un dispositif d'évaluation électronique servant à détecter un objet externe au véhicule dans un environnement du véhicule automobile (26) en fonction du faisceau lumineux de réception (8), l'unité d'émission (2) présentant un émetteur (4) servant à générer le faisceau lumineux d'émission (5), un micromiroir (11) pouvant être commandé, au moyen duquel le faisceau lumineux d'émission (5) peut être amené à pivoter au moins dans une première direction de pivotement (10), et une lentille d'émission (17),
**caractérisé en ce que** la lentille d'émission (17) est disposée sur la trajectoire de faisceau d'émission derrière le micromiroir (11) et est réalisée au moins le long de la première direction de pivotement (10) sous la forme d'une lentille concave-convexe dotée d'une surface à courbure concave (18) qui est tournée vers le micromiroir (11), et dotée d'une surface à courbure convexe (19), dans lequel, au moins le long de la première direction de pivotement (10), un rayon de courbure de la surface à courbure concave (18) est inférieur à un rayon de courbure de la surface à courbure convexe (19) de la lentille d'émission (17).

2. Dispositif de détection d'objets (1) selon la revendication 1, **caractérisé en ce qu'**un angle de détection (α) de l'unité d'émission (2) dans la première direction de pivotement (10) est situé dans une plage de valeurs de 160° à 180°, étant en particulier égal à 180°.

3. Dispositif de détection d'objets (1) selon l'une quelconque des revendications précédentes, **caractérisé en ce que** la première direction de pivotement (10) est une direction horizontale.

4. Dispositif de détection d'objets (1) selon l'une quelconque des revendications précédentes, **caractérisé en ce que** le micromiroir (11) est en outre disposé pivotant dans une deuxième direction de pivotement s'étendant perpendiculairement à la première direction de pivotement (10) de sorte que le faisceau lumineux d'émission (5) peut également pivoter dans la deuxième direction de pivotement.

5. Dispositif de détection d'objets (1) selon la revendication 4, **caractérisé en ce qu'**un angle de détection (β) de l'unité d'émission (2) dans la deuxième direction de pivotement est inférieur à un angle de détection (α) de l'unité d'émission (2) dans la première direction de pivotement (10).

6. Dispositif de détection d'objets (1) selon la revendication 4 ou 5, **caractérisé en ce qu'**un angle de détection (β) de l'unité d'émission (2) dans la deuxième direction de pivotement est situé dans une plage de valeurs de 5° à 30°.

7. Dispositif de détection d'objets (1) selon l'une quelconque des revendications précédentes, **caractérisé en ce que** la lentille d'émission (17) fait partie d'un boîtier de l'unité d'émission (2).

8. Dispositif de détection d'objets (1) selon l'une quelconque des revendications précédentes, **caractérisé en ce que** l'unité de réception (3) présente une pluralité d'éléments de réception (9), en particulier des photodiodes, et une lentille de réception (21) commune à la pluralité des éléments de réception (9), qui est disposée sur la trajectoire de faisceau de réception devant les éléments de réception (9), la lentille de réception (21) étant réalisée sous la forme d'une lentille convexe-concave dotée d'une surface à courbure convexe (22) et dotée d'une surface à courbure concave (23) qui est tournée vers les éléments de réception (9) .

9. Dispositif de détection d'objets (1) selon la revendication 8, **caractérisé en ce que** la lentille de réception (21) et la lentille d'émission (17) sont des lentilles identiques.

10. Dispositif de détection d'objets (1) selon la revendication 8 ou 9, **caractérisé en ce que** les éléments de réception (9) sont répartis le long d'une ligne de courbure imaginaire s'étendant dans la première direction de pivotement (10).

11. Véhicule automobile (26) comprenant un dispositif de détection d'objets (1) selon l'une quelconque des revendications précédentes.
